# EUROPÄISCHE PATENTSCHRIFT

(11) **EP 1 479 495 B1**
(45) Veröffentlichungstag und Bekanntmachung des Hinweises auf die Patenterteilung: **03.03.2010**
(21) Anmeldenummer: 04006306.7
(22) Anmeldetag: 17.03.2004
(51) Int. Cl.: B27D 5/00, B23C 3/12

(54) **Verfahren und Bearbeitungsaggregat zum Bündigfräsen und Abziehen eines an plattenförmige Werkstücke angebrachten Kantenbandes**
Method and machining center for flush milling and smoothing of edge-banding on panel shaped workpieces
Procédé et machine-outil pour affleurer et racler des chants d'une pièce en forme de plaque

(30) Priorität: 23.05.2003 DE 10323806
(43) Veröffentlichungstag der Anmeldung: 24.11.2004
(73) Patentinhaber: IMA Klessmann GmbH Holzbearbeitungssysteme, 32312 Lübbecke (DE)
(72) Erfinder: Rose, Martin Ing. (grad.), 32339 Espelkamp (DE); Bierenriede, Hartmut, 32351 Stemwede (DE)
(74) Vertreter: Schober, Mirko

(56) Entgegenhaltungen:
- DE-A1- 19 834 440
- DE-U1- 9 206 470

## Beschreibung

Die Erfindung bezieht sich auf ein Verfahren gemäß dem Oberbegriff des Patentanspruchs 1 und auf ein Bearbeitungsaggregat nach den Merkmalen des Oberbegriffs des Anspruchs 3.

Aus der Offenlegungsschrift DE 198 34 440 A1 ist ein Bündigfräs- und Ziehklingenaggregat bekannt, mit welchem die Nachbearbeitung des auf die Schmalseiten plattenförmiger Werkstücke aufgebrachten Kantenbandes vorgenommen wird. Nach dem Bündigfräsen der Kanten des Kantenbandes erfolgt die Feinbearbeitung mittels einer Ziehklinge, um eine glatte Oberfläche im angeschnittenen Bereich des Kantenbandes zu erzielen. Das bekannte Aggregat hat sowohl eine Fräswerkzeug-Aufnahmeeinrichtung als auch eine Ziehklingenwerkzeug-Aufnahmeeinrichtung, und diese beiden Aufnahmeeinrichtungen sind bezogen auf eine Drehachse des Aggregates um 180° zueinander versetzt angeordnet. Soll nach dem Bündigfräsvorgang auf die Abzieh-Bearbeitung übergewechselt werden, wird dementsprechend das gesamte Bearbeitungsaggregat um 180° geschwenkt. Dieser Vorgang wird von derjenigen CNC-gesteuerten Holzbearbeitungsmaschine vorgenommen, an deren Werkzeugschnittstelle das Aggregat aufgenommen wird, die sowohl eine Kupplung für die Verbindung einer maschinenseitigen Arbeitsspindel des Aggregats als auch eine Aufnahme an einer Drehachse für die Schwenkung des Aggregates aufweist.

Das bekannte Aggregat benötigt neben dem jeweils an die Profilierung des zu bearbeitenden Kantenbandes angepaßten Fräswerkzeug eine ebenfalls dazu passende Ziehklinge, die als Formwerkzeug, wie als Radius-Ziehklinge, ausgeführt ist. Insoweit hat die Ziehklinge die gleiche Kontur wie die Formschneiden des zugehörigen Fräswerkzeugs, um die davon angeschnittenen Bereiche des Kantenbandes nachbearbeiten zu können.

Der Erfindung liegt die Aufgabe zugrunde, ein Verfahren und ein Bearbeitungsaggregat der vorgenannten Art zu schaffen, mit dem der Aufwand für die Abzieh-Bearbeitung verringert werden kann.

Die Lösung dieser Aufgabe erfolgt mit den Verfahrensmerkmalen gemäß dem Patentanspruch 1 sowie mit einem Bearbeitungsaggregat nach den Merkmalen des Patentanspruchs 3.

Für die Erfindung ist wesentlich, auf das Verwenden einer separaten Ziehklinge zu verzichten, denn die Aufgabe der Ziehklinge kann von einer der Formschneiden des Fräswerkzeugs übernommen werden, sofern diese nur in gleicher Weise wie die Ziehklinge relativ zu dem zu bearbeitenden Kantenband ausgerichtet und zugestellt wird. Eine solche Ausrichtung ist bei denjenigen Fräswerkzeugen kein Problem, entlang deren Umfang nur relativ wenige Formschneiden vorgesehen sind. Es handelt sich hier insbesondere um Fräswerkzeuge, bei denen vier jeweils um 90° zueinander versetzte Formschneiden vorgesehen sind. Bei Ausrichtung einer dieser Formschneiden senkrecht zu derjenigen Tangente der Schneidenflugbahn, die mit der Längsrichtung des Kantenbandes oder mit der Tangente an das Kantenband an der Werkzeugeingriffsstelle zusammenfällt, stören die weiter an dem Fräswerkzeug vorhandenen Formschneiden insoweit nicht, als sie nicht in den Arbeitsbereich der als Ziehklinge fungierenden Formschneide hineinragen.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine Seitansicht eines Bearbeitungsaggregates zum Bündigfräsen und Abziehen,
- Fig. 2: einen Schnitt durch eine der Fräseinheiten des Bearbeitungsaggregates nach Fig. 1,
- Fig. 3: die Draufsicht auf das Bearbeitungsaggregat nach Fig. 1 in der für die Abzieh-Bearbeitung vorgesehenen Position und
- Fig. 4: die Draufsicht auf das Bearbeitungsaggregat nach Fig. 1 in der für die Fräsbearbeitung vorgesehenen Position.

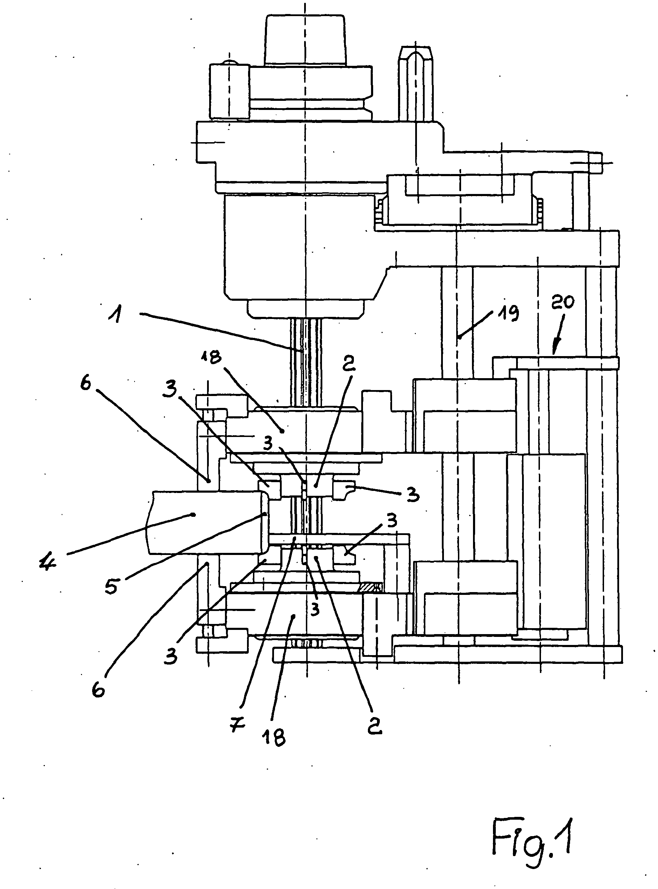

Fig. 1 zeigt ein Bearbeitungsaggregat, wie es an der Werkzeugschnittstelle einer CNC-gesteuerten Holzbearbeitungsmaschine angekuppelt werden kann. Hiernach besteht als erstes eine kraftschlüssige Verbindung einer Antriebsspindel mit einer Arbeitsspindel 1 des Aggregates, zum zweiten ist das Aggregat mit einer Drehachse der Maschine verbunden, über die es um die Achse seiner Arbeitsspindel 1 geschwenkt werden kann.

Die Arbeitsspindel 1 ist eine Vielkeilwelle, auf der zwei Fräswerkzeuge 2 in axialer Richtung verschieblich aufgenommen sind, die in Rotationsrichtung formschlüssig mit der Arbeitsspindel 1 in Verbindung stehen. Die Fräswerkzeuge 2 haben Formschneiden 3, von denen jeweils vier in 90° zueinander versetzter Anordnung vorhanden sind. Die Schneidenform der Formschneiden 3 entspricht einer Kontur, die entlang der Längskanten eines an plattenförmige Werkstücke 4 angefahrenen Kantenbandes 5 fertiggeschnitten wird. Denn solche Kantenbänder 5 werden zunächst mit Überstand über die Breitseiten der Werkstücke 4 angefahren und mittels der Fräswerkzeuge 2 mit den oberen und unteren Breitseiten des jeweiligen Werkstücks 4 bündiggefräst.

Hierbei werden die Fräswerkzeuge 2 in vertikaler Richtung der oberen und der unteren Breitseite der Werkstücke 4 nachgeführt, ebenso auch der äußeren Fläche des Kantenbandes 5, wozu Tastglieder 6 für die vertikale Tastung und ein Tastglied 7 für die horizontale Tastung vorgesehen sind.

Die Tastglieder 6 sind mit Lagerkörpern 18 verbunden, an denen die Fräswerkzeuge 2 in axialer Richtung der Arbeitsspindel 1 gehalten sind. Die Lagerkörper 18 sind an einer Vertikalführung 19 gehalten, und es greift an den Lagerkörpern 18 eine Vorrichtung 20 für die Gewichtskompensation der Lagerkörper 18 einschließlich deren Fräswerkzeuge 2 an, worüber der von den Tastgliedern 6 auf das Werkstück 4 ausgeübte Tastdruck einstellbar ist.

Die Besonderheit der Fräswerkzeuge 2 liegt darin, daß deren Formschneiden 3 nicht nur für das Bündigfräsen des Kantenbandes 5 sondern auch für das Abziehen der durch das Bündigfräsen angeschnittenen Randbereiche des Kantenbandes 5 genutzt werden. Dazu wird eine der Formschneiden 3 beider Fräswerkzeuge 2 relativ zum Kantenband 5 in der Weise angestellt, wie es Fig. 1 zeigt, wobei in dieser Position der Formschneiden 3 die Fräswerkzeuge 2 festgesetzt sind.

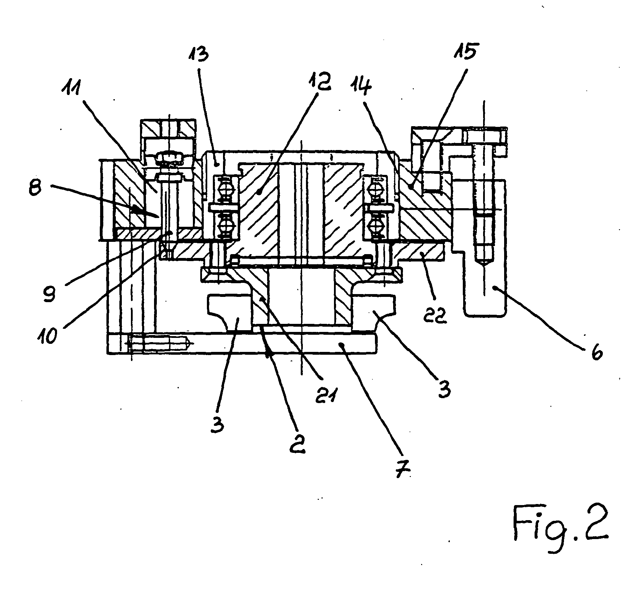

Die entsprechende Arretiervorrichtung 8 zeigt Fig. 2. Die Fräswerkzeuge 2 haben ein Nabenteil 21, durch den die Arbeitsspindel 1 hindurchtritt und an dem radial nach außen vorstehend die Formschneiden 3 angesetzt sind. Bei den Formschneiden 3 handelt es sich um Schneidplättchen, welche die der auszubildenden Kontur entsprechenden Schneidkanten aufweisen. Das Nabenteil 21 ist mit einem Wellenstummel 12 verschraubt, welcher einen radial vorstehenden Flansch 22 aufweist. In diesem Flansch 22 befinden sich jeweils in der Radialrichtung der Formschneiden 3 Bohrungen 10, in die ein axial verschieblicher Arretierstift 9 der Arretiervorrichtung 8 eingreifen kann. Die Verschieberichtung des Arretierstiftes 9 ist mit der Arbeitsspindel 1 achsparallel, und die Verschiebung des Arretierstiftes 9 wird durch einen Hilfsantrieb 11, beispielsweise durch einen Pneumatikzylinder, vorgenommen.

Nach beendetem Fräsvorgang müssen die Fräswerkzeuge 2 weiter zugestellt werden, da die für den Ziehvorgang jeweils vorgesehene Formschneide 3 in ihrer Funktion als Ziehklinge beim Abziehvorgang über die Schneidenflugbahn der Fräsbearbeitung hinaus weiter vorstehen muß. Grundsätzlich können dazu die Tastglieder 6 und 7 in geeigneter Weise verstellt werden.

Hinsichtlich der Vertikal zustellung der als Ziehklinge fungierenden Formschneide 3 ist beim Ausführungsbeispiel gemäß Fig. 2 vorgesehen, jedes Fräswerkzeug 2 in axialer Richtung um eine geringe Wegstrecke zu verschieben. Der Achsstummel 12, der drehfest mit der Arbeitsspindel 1 ist, ist dazu in axialer Richtung in eine Hülse 13 eingesetzt, die ein Außengewinde 14 aufweist. Dieses wirkt mit einem Innengewinde eines gestellfest an dem betreffenden Lagerkörper 18 angeordneten Haltering 15 nach Art einer Mutter zusammen, gegenüber dem bei Verdrehen der Wellenstummel 12 sich mitsamt dem Fräswerkzeug 2 in axialer Richtung verschiebt. Dazu ist der Wellenstummel 12 an der dem Fräswerkzeug 2 abgekehrten Seite mit einem entsprechenden Schwenkantrieb gekuppelt, der nicht dargestellt ist.

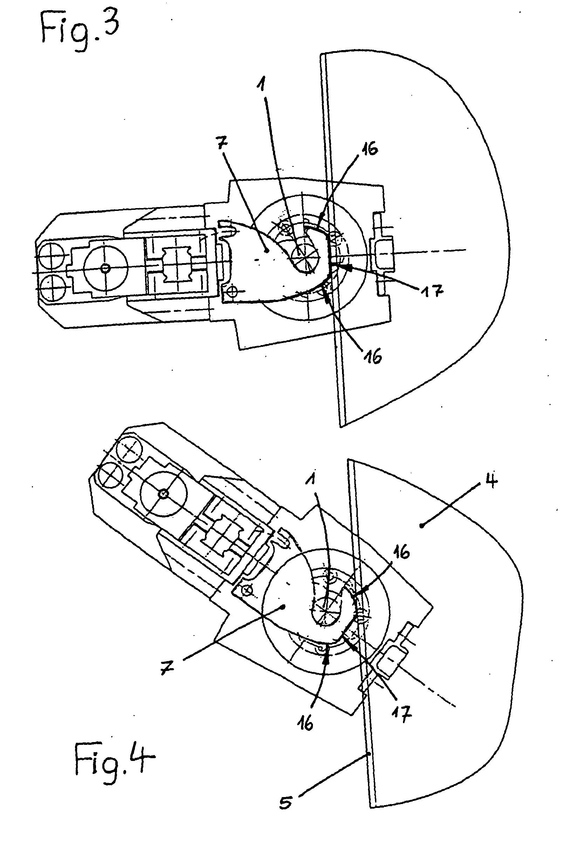

Die Figuren 3 und 4 veranschaulichen, wie mit Hilfe des Tastgliedes 7 die horizontale Zustellung der Schneidwerkzeuge 2 für die Abzieh-Bearbeitung vorgenommen werden kann. Das als Tastkufe ausgebildete Tastglied 7 hat eine Tastkante für die Beaufschlagung des Kantenbandes mit zwei kreisförmig gebogenen Abschnitten 16, zwischen denen sich ein abgeflachter Kantenabschnitt 17 befindet, der geradlinig abgeflacht sein kann. Da das gesamte Bearbeitungsaggregat - wie erwähnt - um die Achse der Arbeitsspindel 1 schwenkbar ist, kann es gegenüber dem zu bearbeitenden Kantenband 5 am Werkstück 4 schräg angestellt werden, wie es Fig. 4 zeigt. Hierbei stützt sich das Tastglied 7 mit einer der gerundeten Abschnitte 16 seiner Tastkante an dem Kantenband 5 nahe der Bearbeitungsstelle ab. Der Arbeitspunkt liegt hierbei etwas weiter von der Achse der Arbeitsspindel 1 ab, dies entspricht der Stellung des Fräswerkzeugs 2 bei der Fräsbearbeitung. Wird das Bearbeitungsaggregat so geschwenkt, wie es Fig. 3 zeigt, wobei das Tastglied 7 sich mit seinem abgeflachten Abschnitt 17 seiner Tastkante an dem Kantenband 5 des Werkstücks 4 abstützt, dann entspricht dies der Abzieh-Bearbeitung, bei der der Arbeitspunkt der als Ziehklinge fungierenden Formschneide 3 weiter zum Werkstück 4 hin liegt. In den Figuren 3 und 4 ist die Differenz zwischen den Arbeitspunkten beim Fräsvorgang und bei der Abzieh-Bearbeitung übertrieben groß dargestellt. Diese Differenz entspricht im praktischen Betrieb der Dicke des Spans, der mit der als Abziehklinge eingesetzten Formschneide 3 des Fräswerkzeugs 2 abgezogen werden soll.

## Patentansprüche

1. Verfahren zum Bündigfräsen und Abziehen eines auf die Schmalseiten plattenförmiger Werkstücke aus Holz und/oder Holzersatzstoffen aufgebrachten Kantenbandes mittels zumindest eines an einer Arbeitsspindel eines Bearbeitungsaggregates aufgenommenen Fräswerkzeugs, welches dem Profil des Kantenbandes entsprechende Formschneiden hat, wobei nach dem Bündigfräsen mittels einer an dem Bearbeitungsaggregat angeordneten Ziehklinge eine abschließende Feinbearbeitung des Kantenbandes vorgenommen wird,
**dadurch gekennzeichnet,**
**daß** als Ziehklinge eine der Formschneiden des Fräswerkzeugs verwendet wird, wozu diese Formschneiden durch Drehen des -Fräswerkzeugs auf das Kantenband ausgerichtet sowie danach das Fräswerkzeug gegen ein Verdrehen arretiert wird und das Fräswerkzeug entsprechend der Dicke des abzuziehenden Spans zugestellt wird.

2. Verfahren nach Anspruch 1,
**dadurch gekennzeichnet,**
**daß** die Zustellung des Fräswerkzeugs für den Abzieh-Bearbeitungsgang aus der für die Fräsbearbeitung eingestellten Zustellposition heraus vorgenommen wird.

3. Bearbeitungsaggregat zum Bündigfräsen und Abziehen eines auf die Schmalseiten plattenförmiger Werkstücke aus Holz und/oder Holzersatzstoffen aufgebrachten Kantenbandes mit einer Arbeitsspindel (1) und zumindest einem darauf aufgenommenen Fräswerkzeug (2), welches an die Randkontur des jeweiligen Kantenbandes (5) angepaßte Formschneiden (3) aufweist,
**dadurch gekennzeichnet,**
**daß** eine das Fräswerkzeug (2) während der Abzieh-Bearbeitung blockierende Arretiervorrichtung (8) vorhanden ist, die derart ausgebildet und angesteuert ist, daß in der Arretierlage eine der Formschneiden (3) des Fräswerkzeugs (2) sich in einer zum Kantenband (5) hin vorstehenden Position befindet.

4. Bearbeitungsaggregat nach Anspruch 3,
**dadurch gekennzeichnet,**
**daß** das Fräswerkzeug (2) vier Formschneiden (3) aufweist, die um 90° zueinander versetzt angeordnet sind.

5. Bearbeitungsaggregat nach Anspruch 3 oder 4,
**dadurch gekennzeichnet,**
**daß** das Fräswerkzeug (2) zumindest eine achsparallele Bohrung (10) hat, in deren Flucht ein von einem Hilfsantrieb (11) betätigter Arretierstift (9) axial verschieblich angeordnet ist.

6. Bearbeitungsaggregat nach Anspruch 5,
**dadurch gekennzeichnet,**
**daß** jeder der Formschneiden (3) eine solche Bohrung (10) für den Eingriff des Arretierstiftes (9) zugeordnet ist.

7. Bearbeitungsaggregat nach einem der Ansprüche 3 - 6,
**dadurch gekennzeichnet,**
**daß** bei tastender Führung des Aggregates oder zumindest der Arbeitsspindel (1) mit an den Werkstückseiten anliegenden Tastgliedern (6, 7) für die Zustellung des Fräswerkzeuges (2) beim Abzieh-Bearbeitungsgang die Tastglieder (6, 7) und/oder das Fräswerkzeug (2) verstellbar sind.

8. Bearbeitungsaggregat nach Anspruch 7,
**dadurch gekennzeichnet,**
**daß** das Fräswerkzeug (2) mittels eines an der Arbeitsspindel (1) verschiebbar aufgenommenen Wellenstummels (12) in einer Hülse (13) mit einem Außengewinde (14) gelagert ist, wobei diese Hülse (13) in einem Innengewinde eines gestellfesten Halteringes (15) angeordnet und mit einem Schwenkantrieb gekuppelt ist.

9. Bearbeitungsaggregat nach Anspruch 7 oder 8,
**dadurch gekennzeichnet,**
**daß** für die Tastung in radialer Richtung des Fräswerkzeugs (2) eine Tastkufe (7) vorgesehen ist, die zwischen zwei kreisförmigen Abschnitten (16) ihrer Tastkante einen abgeflachten Kantenabschnitt (17) aufweist.

## Claims

1. Method for flush milling and smoothing of edge-banding applied to the narrow sides of panel-shaped workpieces made of wood and/or wood substitutes by means of at least one milling tool fitted on a work spindle of a machining centre and having shaped cutters corresponding to the profile of the edge-banding wherein after the flush milling a final fine machining of the edge-banding is carried out by means of a draw blade mounted on the machining centre,
**characterised in that** one of the shaped cutters of the milling tool is used as the draw blade, to which end this shaped cutter is aligned with the edge-banding by rotating the milling tool after which the milling tool is locked against rotation and the milling tool is set up corresponding to the thickness of the splinter which is to be drawn off.

2. Method according to claim 1
**characterised in that** setting up the milling tool for the smooth machining step is undertaken from the set-up position which has been arranged for the milling work.

3. Machining centre for flush milling and smoothing of edge-banding applied to the narrow sides of panel-shaped workpieces made of wood and/or wood substitutes, having a work spindle (1) and at least one milling tool (2) fitted on same wherein the milling tool has shaping cutters (3) adapted to the edge contour of each relevant edge-banding (5)
**characterised in that** a locking device (8) is provided which blocks the milling tool (2) during the smoothing work and which is designed and controlled such that in the locking position one of the shaping cutters (3) of the milling tool (2) is located in a position protruding relative to the edge-banding (5).

4. Machining centre according to claim 3
**characterised in that** the milling tool (2) has four shaping cutters (3) which are arranged 90° off-set relative to one another.

5. Machining centre according to claim 3 or 4
**characterised in that** the milling tool (2) has at least one axially parallel bore (10) and a locking pin (9) actuated by a secondary drive (11) is mounted axially displaceable aligned in the bore.

6. Machining centre according to claim 5
**characterised in that** one such bore (10) is assigned to each one of the shaping cutters (3) for the engagement of the locking pin (9).

7. Machining centre according to one of claims 3 to 6
**characterised in that** in the case of a touch guide of the machining centre or at least one of the work spindles (1) with sensor members (6,7) bearing against the workpiece sides for setting up the milling tool (2) during the smoothing work the sensor members (6, 7) and/or the milling tool (2) are displaceable.

8. Machining centre according to claim 7
**characterised in that** the milling tool (2) is mounted in a sleeve (13) having an external thread (14) by means of a shaft stump (12) which is housed displaceable on the work spindle (1) wherein this sleeve (13) is mounted in an internal thread of a retaining ring (15) which is fixed secured relative to the frame and this sleeve is coupled to a swivel drive.

9. Machining centre according to claim 7 or 8
**characterised in that** for sensing in the radial direction of the milling tool (2) there is a sensor skid (7) which has a flattened edge section (17) between two circular sections (16) of its sensor edge.

## Revendications

1. Procédé pour le fraisage affleuré et le dressage d'une bande de chant, appliquée sur les chants de pièces en forme de plaques en bois et / ou en matériaux de remplacement du bois, au moyen d'au moins un outil de fraisage, monté sur un arbre moteur d'un dispositif d'usinage, lequel outil de fraisage présente des organes de coupe façonnés correspondant au profil de la bande de chant, un traitement de finition de la bande de chant étant exécuté après le fraisage affleuré, au moyen d'un racloir, installé sur le dispositif d'usinage,
**caractérisé en ce que**
l'on utilise, comme racloir, l'un des organes de coupe façonnés de l'outil de fraisage, cet organe de coupe façonné étant, dans ce but, dirigé sur la bande de chant, par rotation dudit outil de fraisage, et l'outil de fraisage étant ensuite bloqué en rotation n et l'outil de fraisage étant ajusté en fonction de l'épaisseur des copaux à enlever.

2. Procédé selon la revendication 1,
**caractérisé en ce que**
l'ajustage de l'outil de fraisage, pour l'opération d'usinage avec enlèvement de copeaux, est effectué à partir de la position d'ajustage réglée pour le fraisage.

3. Machine-outil pour le fraisage affleuré et le dressage d'une bande de chant appliquée sur les chants de pièces en forme de plaques en bois et / ou en matériaux de remplacement du bois, avec un arbre moteur (1) et au moins un outil de fraisage (2), monté sur celui-ci, qui présente des organes de coupe façonnés (3), qui sont adaptés au contour marginal de chaque bande de chant (5), **caractérisée en ce qu'**un dispositif d'arrêt (8), qui, bloquant l'outil de fraisage (2) pendant l'opération de raclage, est configuré et commandé de sorte que, dans la position de blocage, l'un des organes de coupe façonnés (3) de l'outil de fraisage (2) se trouve dans une position en saillie vers la bande de chant (5).

4. Machine-outil selon la revendication 3,
**caractérisée en ce que**
l'outil de fraisage (2) présente quatre organes de coupe façonnés (3), qui sont disposés en étant décalés de 90° les uns par rapports aux autres.

5. Machine-outil selon revendication 3 ou 4,
**caractérisée en ce que**
l'outil de fraisage (2) est pourvu d'au moins un alésage (10) axialement parallèle, dans l'alignement duquel une tige d'arrêt (9), actionnée par une commande auxiliaire (11), est disposée en pouvant être déplacée axialement.

6. Machine-outil selon la revendication 5,
**caractérisée en ce que**,
à chacun des organes de coupe façonnés (3), est associé un tel alésage (10) pour l'introduction de la tige d'arrêt (9).

7. Machine-outil selon l'une des revendications précédentes,
**caractérisée en ce que**, lors du guidage par contact de la machine-outil ou au moins de l'arbre moteur (1) au moyen d'organes palpeurs (6, 7) portant contre les côtés de la pièce à usiner, pour l'ajustage de l'outil de fraisage (2) lors de l'opération de dressage, les organes palpeurs (6, 7) et / ou l'outil de fraisage (2) peuvent être ajustés.

8. Machine-outil selon la revendication 7,
**caractérisée en ce que**
l'outil de fraisage (2) est monté dans une douille (13) avec un filet extérieur (14), au moyen d'un bout d'arbre (12), déplaçable, reçu de manière ajustable sur l'arbre moteur (1), cette douille (13) étant disposée dans un filet intérieur d'une bague de support (15) fixe par rapport au bâti, et couplée avec un entraînement à pivotement.

9. Machine-outil selon revendication 7 ou 8,
**caractérisée en ce que**,
pour la détection dans la direction radiale de l'outil de fraisage (2), est prévu un patin palpeur, qui présente, entre deux sections circulaires (16) de son bord palpeur, une section marginale (17) aplatie.
